# EUROPEAN PATENT SPECIFICATION

(11) **EP 2 921 675 B1**
(45) Date of publication and mention of the grant of the patent: **18.10.2017**
(21) Application number: 13855962.0
(22) Date of filing: 25.06.2013
(51) Int. Cl.: F02B 3/06, F02B 23/02, F02D 19/06, F02D 19/08, F02D 19/10, F02D 31/00, F02D 41/00, F02D 41/02, F02D 41/30

(54) **DIESEL ENGINE CONTROL DEVICE, DIESEL ENGINE, AND DIESEL ENGINE CONTROL METHOD**
DIESELMOTORSTEUERUNGSVORRICHTUNG, DIESELMOTOR UND DIESELMOTORSTEUERUNGSVERFAHREN
DISPOSITIF DE COMMANDE DE MOTEUR DIESEL, MOTEUR DIESEL, ET PROCÉDÉ DE COMMANDE DE MOTEUR DIESEL

(30) Priority: 14.11.2012 JP 2012250229
(43) Date of publication of application: 23.09.2015
(73) Proprietor: Mitsubishi Heavy Industries, Ltd., Tokyo 108-8215 (JP)
(72) Inventor: SONODA, Takashi, Tokyo 108-8215 (JP); MURATA, Hideaki, Tokyo 108-8215 (JP); ISHIDA, Hiroyuki, Tokyo 108-8215 (JP); HIRAOKA, Naohiro, Tokyo 108-8215 (JP); KOMADA, Yasuyuki, Tokyo 108-8215 (JP); WATANABE, Sota, Tokyo 108-8215 (JP)
(74) Representative: Hoffmann Eitle
(86) International application number: PCT/JP2013/067409
(87) International publication number: WO 2014/076995

(56) References cited:
- EP-A1- 1 485 595
- WO-A1-2011/153069
- GB-A- 1 370 619
- GB-A- 2 375 796
- JP-A- S5 718 446
- JP-A- S6 296 742
- JP-A- S6 390 633
- JP-A- H02 153 238
- JP-A- H08 158 980
- JP-A- H09 209 788
- JP-A- H11 324 750
- JP-A- S62 214 238
- JP-A- 2003 184 591
- JP-A- 2004 108 153
- JP-A- 2006 342 689
- US-A- 5 711 270
- US-B1- 6 213 087

## Description

### {Technical Field}

The present invention relates to a diesel engine control device, a diesel engine, and a diesel engine control method.

### {Background Art}

There are known diesel engines (hereinafter, referred to as "dual-fuel diesel engines") in which gas fuel, such as natural gas, is used as main fuel, oil fuel having excellent compression ignition capability is used as pilot fuel, and self-ignition of the oil fuel is caused in a high-temperature combustion chamber, thereby combusting the gas fuel as main fuel. Because the dual-fuel diesel engines use gas fuel, emissions of CO₂ and hazardous substances, such as black smoke, are less during the combustion.

For example, Japanese Unexamined Utility Model Application, Publication No. S62-45339 discloses a dual-fuel diesel engine in which low-cetane fuel having poor compression ignition capability, such as gas fuel, is used as main fuel, and oil fuel having excellent compression ignition capability is used as pilot fuel. The engine disclosed in Japanese Unexamined Utility Model Application, Publication No. S62-45339 has gas-fuel injection valves and pilot-fuel injection valves that are provided in a cylinder head, gas fuel and pilot fuel are injected from the gas-fuel injection valves and the pilot-fuel injection valves toward a combustion chamber, and self-ignition of the pilot fuel is caused in the high-temperature combustion chamber, thereby combusting the main fuel.

WO 2011/153069 A1 and US 6,213,087 B1 disclose a diesel engine control device and its operation and represent the closest prior art.

### {Summary of Invention}

### {Technical Problem}

However, Japanese Unexamined Utility Model Application, Publication No. S62-45339 does not disclose a specific method for supplying oil fuel and gas fuel to the diesel engine. In dual-fuel diesel engines, stable operation using oil fuel and gas fuel is to be achieved.

The present invention is made in view of such circumstances, and an object thereof is to provide a diesel engine control device, a diesel engine, and a diesel engine control method that are capable of reducing the use of oil fuel and also allowing stable operation using oil fuel and gas fuel.

### {Solution to Problem}

This obejct is solved by a diesel control device with the features of claim 1, a diesel engine with the features of claim 3 and a diesel engine control method with the features of claim 4. In order to solve the above-described problem, a diesel engine control device, a diesel engine, and a diesel engine control method of the present invention employ the following solutions.

A first aspect of the present invention provides a diesel engine control device for a diesel engine that is operated by being supplied with gas fuel and oil fuel, the control device comprising: a governor control unit for performing governor control; and a fuel control unit for reducing a rate of increase of oil fuel supply compared with that before a load of the diesel engine reaches a predetermined value, and for starting gas fuel supply after a certain delay from timing at which the load reaches the predetermined value.

According to this configuration, the diesel engine control device controls the gas fuel supply and the oil fuel supply to the diesel engine. Supplying gas fuel and oil fuel is conducted through governor control by the governor control means. Then, when the load of the diesel engine increases to the predetermined value, the single-fuel combustion, which uses oil fuel, is switched to the multi-fuel combustion, which uses oil fuel and gas fuel.

However, if supplying gas fuel is started at the same time when the load of the diesel engine increases and reaches the predetermined value, the load (rotating speed) of the diesel engine may increase rapidly. In such a case, in order to reduce the rapidly increased load, the supply of fuel is reduced through governor control. However, as a result, the load decreases too much, and control is performed so as to increase the load again, so that so-called chattering may occur. Then, when the load decreases too much and becomes equal to or lower than the predetermined value again, supplying gas fuel is stopped. In this way, when chattering occurs, gas fuel supplying and stopping are repeated, which may cause a situation in which frequent switching occurs between single-fuel combustion and multi-fuel combustion.

Therefore, according to this configuration, when the load of the diesel engine increases to the predetermined value, the rate of increase of the oil fuel supply is reduced compared with that before the load reaches the predetermined value, and supplying gas fuel is started after a certain delay from the timing at which the load reaches the predetermined value.

Reducing the rate of increase of the oil fuel supply means that the increase in the load becomes slower than before. Then, when the timing at which gas fuel is supplied is delayed, supplying gas fuel is started during the slow increase in the load. Therefore, a situation in which the load increases rapidly due to supplying gas fuel, with chattering, is prevented.

Therefore, with this configuration, it is possible to reduce the use of oil fuel and also to allow stable operation using oil fuel and gas fuel.

In the above-described first aspect, it is preferable that the fuel control unit reduces the supply of the oil fuel compared with that before the load decreases and reaches the predetermined value and stops supplying the gas fuel after a certain delay from timing at which the load reaches the predetermined value.

When the supply of oil fuel is reduced, if supplying gas fuel is stopped at the same time when the load of the diesel engine decreases and reaches the predetermined value, the load (rotating speed) of the diesel engine may decrease rapidly. In this case, chattering may occur, and, when the load exceeds the predetermined value again, gas fuel supplying and stopping are repeated, which may cause a situation in which frequent switching occurs between single-fuel combustion and multi-fuel combustion.

Therefore, according to this configuration, when the load decreases to the predetermined value, the supply of oil fuel is reduced, and supplying gas fuel is stopped after a certain delay from the timing at which the load reaches the predetermined value.

As a result, because a reduction in the supply of oil fuel and stopping of the gas fuel supply do not occur at the same time, a situation in which the load decreases rapidly, with chattering, is prevented with this configuration.

A second aspect of the present invention provides a diesel engine control device for a diesel engine that is operated by being supplied with gas fuel and oil fuel, the control device comprising: a governor control unit for performing governor control; and a fuel control unit for switching from single-fuel combustion using the oil fuel to multi-fuel combustion using the oil fuel and the gas fuel when a load of the diesel engine increases and reaches a first predetermined value, and for switching from the multi-fuel combustion to the single-fuel combustion when the load of the diesel engine decreases and reaches a second predetermined value smaller than the first value.

According to this configuration, when the load of the diesel engine increases and reaches the first predetermined value, the single-fuel combustion, which uses oil fuel, is switched to the multi-fuel combustion, which uses oil fuel and gas fuel. Then, when the load of the diesel engine decreases and reaches the second predetermined value, which is smaller than the first load, the multi-fuel combustion is switched to the single-fuel combustion. As a result, when the single-fuel combustion is switched to the multi-fuel combustion, even if chattering occurs and thus the load decreases, it is possible to prevent switching to the single-fuel combustion again. Furthermore, when the multi-fuel combustion is switched to the single-fuel combustion, even if chattering occurs and thus the load increases, it is possible to prevent switching to the multi-fuel combustion again.

Therefore, with this configuration, it is possible to reduce the use of oil fuel and also to allow stable operation using oil fuel and gas fuel.

A third aspect of the present invention provides a diesel engine including: a gas-fuel injection valve that is provided in a combustion chamber and that injects gas fuel; an oil-fuel injection valve that is provided in the combustion chamber and that injects oil fuel; and the above-described control device.

A fourth aspect of the present invention provides a diesel engine control method for a diesel engine that is operated by being supplied with gas fuel and oil fuel, the control method comprising: a first step of reducing the rate of increase of oil fuel supply compared with that before a load of the diesel engine increases and reaches a predetermined value; and a second step of starting gas fuel supply after a certain delay from timing at which the load decreases and reaches the predetermined value.

A fifth aspect of the present invention provides a diesel engine control method for a diesel engine that is operated by being supplied with gas fuel and oil fuel, the control method comprising: a first step of switching from single-fuel combustion using the oil fuel to multi-fuel combustion using the oil fuel and the gas fuel when a load of the diesel engine increases and reaches a first predetermined value; and a second step of switching from the multi-fuel combustion to the single-fuel combustion when the load of the diesel engine decreases and reaches a second predetermined value smaller than the first value.

### {Advantageous Effects of Invention}

According to the present invention, an advantageous effect of making it possible to reduce the use of oil fuel and also to allow stable operation using oil fuel and gas fuel.

### {Brief Description of Drawings}

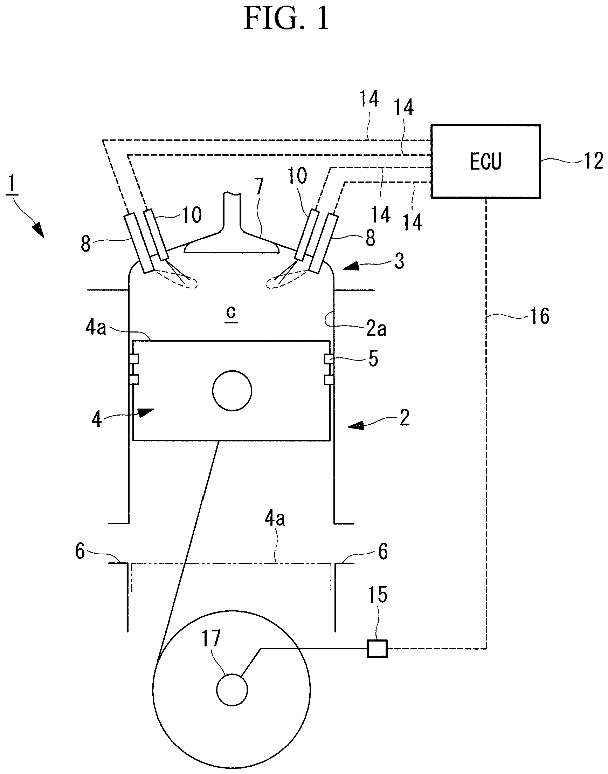

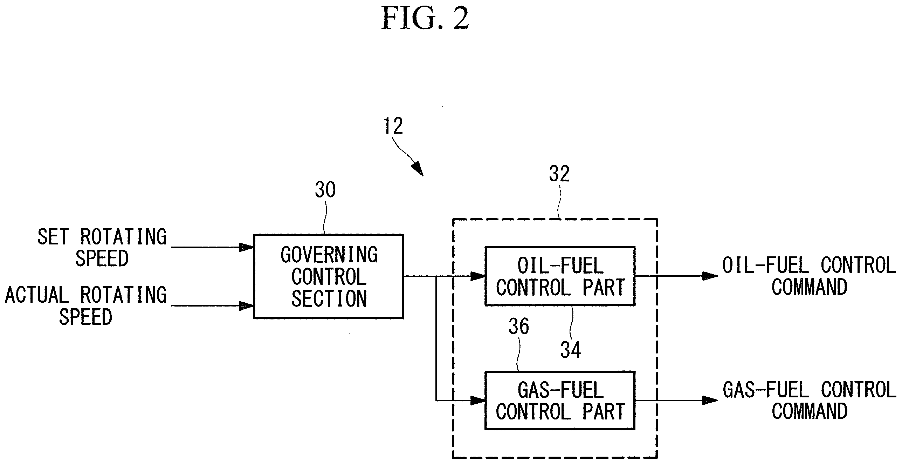

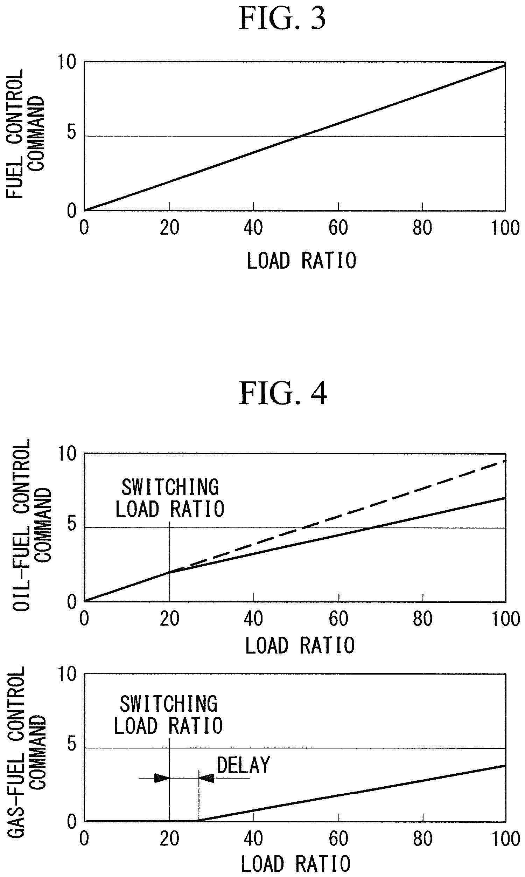

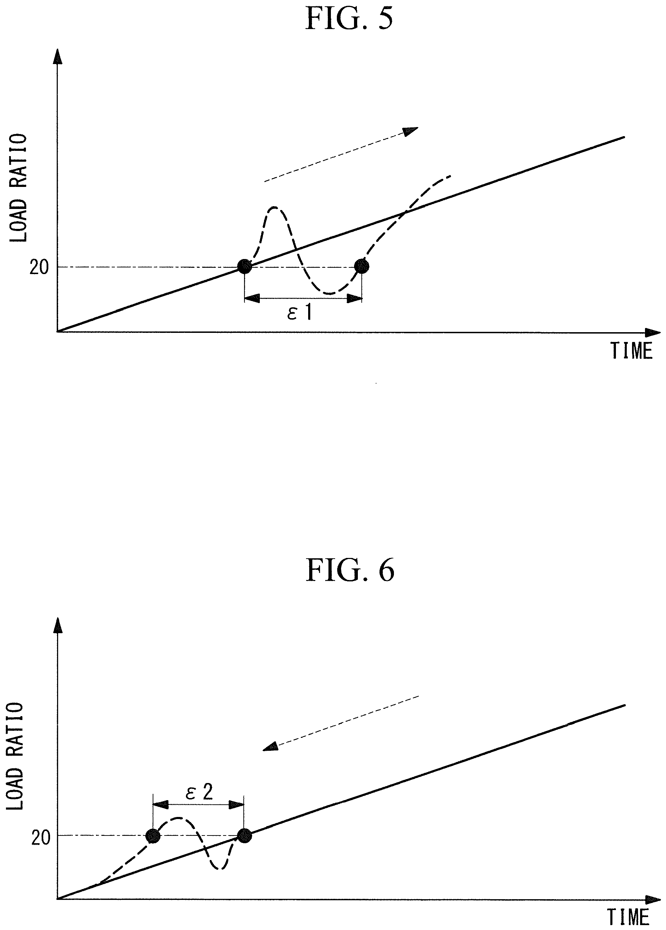

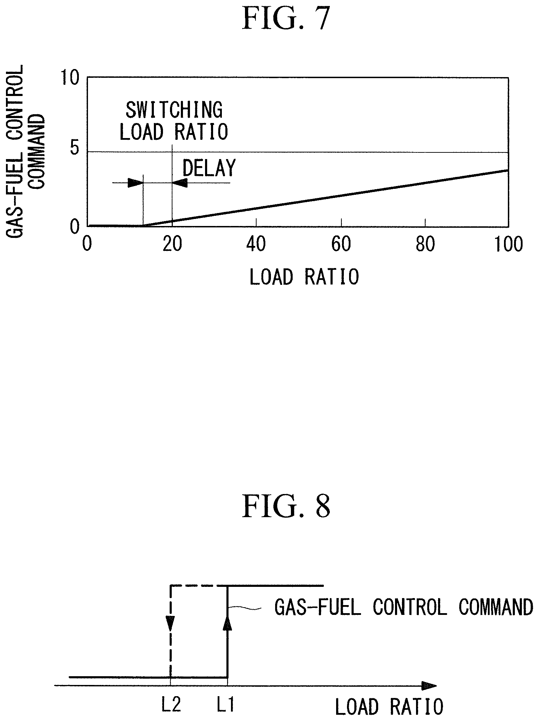

{Fig. 1} Fig. 1 is a view showing the configuration of a dual-fuel diesel engine according to a first embodiment of the present invention.
{Fig. 2} Fig. 2 is a block diagram showing the electrical configuration of an ECU according to the first embodiment of the present invention.
{Fig. 3} Fig. 3 is a graph showing a relationship between the sum of fuel control commands for oil fuel and gas fuel, and the load ratio, according to the first embodiment of the present invention.
{Fig. 4} Fig. 4 is a graph showing a change in oil-fuel control command and a change in gas-fuel control command in the case where the load of the dual-fuel diesel engine according to the first embodiment of the present invention increases.
{Fig. 5} Fig. 5 is a time chart in the case where the load of the dual-fuel diesel engine according to the first embodiment of the present invention increases.
{Fig. 6} Fig. 6 is a time chart in the case where the load of the dual-fuel diesel engine according to the first embodiment of the present invention decreases.
{Fig. 7} Fig. 7 is a graph showing a change in gas-fuel control command in the case where the load of the dual-fuel diesel engine according to the first embodiment of the present invention decreases.
{Fig. 8} Fig. 8 is a schematic view showing timing at which output of a gas-fuel control command is started and stopped, according to a second embodiment of the present invention.

### {Description of Embodiments}

A diesel engine control device, a diesel engine, and a diesel engine control method according to one embodiment of the present invention will be described below with reference to the drawings.

### [First Embodiment]

A first embodiment of the present invention will be described below.

A diesel engine according to the first embodiment is a dual-fuel diesel engine that is operated by using gas fuel as main fuel and by using oil fuel as pilot fuel, and is used as a main engine of a ship, for example.

Fig. 1 is a view showing the configuration of a dual-fuel diesel engine 1 of the first embodiment.

The dual-fuel diesel engine 1 includes a cylindrical cylinder 2, a cylinder head 3 that is fixed on an upper end of the cylinder 2, and a piston 4 that is movably accommodated in the cylinder 2 so as to move forward and backward. A combustion chamber c is formed by a circumferential wall 2a of the cylinder 2, the cylinder head 3, and a top surface 4a of the piston 4.

Note that reference sign 5 in the figure denotes a piston ring.

Scavenge ports 6 are open in the circumferential wall 2a at lower portions of the cylinder 2. The scavenge ports 6 are formed at positions higher than the top surface 4a (indicated by the two-dot chain line in the figure) of the piston 4 located in the vicinity of a bottom dead position, so that air is supplied from the scavenge ports 6 to the combustion chamber c when the piston 4 is located in the vicinity of the bottom dead position. Furthermore, at the top of the cylinder head 3, an exhaust port is open, and an exhaust valve 7 that opens and closes the exhaust port is provided. The exhaust valve 7 is open until the piston 4 reaches a position which is about 100 degrees before the top dead position, during a scavenging process in which the piston 4 is moving upward. Then, exhaust gas remaining in the combustion chamber c from the prior process is scavenged by air supplied from the scavenge ports 6 to the combustion chamber c.

The cylinder head 3 is provided with gas-fuel injection valves 8 that inject gas fuel into the combustion chamber c and oil-fuel injection valves 10 that similarly inject oil fuel, which has excellent compression ignition capability, into the combustion chamber c. The gas-fuel injection valves 8 are provided at positions that are 180-degree away from each other in the circumferential direction with reference to a cylinder center o serving as the rotation center. The oil-fuel injection valves 10 are provided at positions that are 180-degree away from each other in the circumferential direction with reference to the cylinder center o serving as the rotation center.

Note that, in the first embodiment, although four injection holes are provided in each of the gas-fuel injection valves 8 and also in each of the oil-fuel injection valves 10, the number of the gas-fuel injection valves 8 and the number of the oil-fuel injection valves 10 are not limited and, for example, may be one. However, in the first embodiment, in which the exhaust valve 7 is provided at the top of the cylinder head 3, it is preferable that a plurality of gas-fuel injection valves 8 and a plurality of oil-fuel injection valves 10 be respectively arranged at equal intervals in the circumferential direction.

Furthermore, the gas-fuel injection valves 8 and the oil-fuel injection valves 10 are connected to an engine control unit (hereinafter, referred to as "ECU") 12 via cables 14.

The ECU 12 is connected, via a cable 16, to a crank angle sensor 15 that detects the angle of rotation of a crankshaft 17. Then, a signal indicating the angle of rotation of the crankshaft 17 is received from the crank angle sensor 15, thereby the phase of the piston 4 is detected. Furthermore, the gas-fuel injection valves 8 and the oil-fuel injection valves 10 inject gas fuel and oil fuel into the combustion chamber c at predetermined timings based on signals sent from the ECU 12.

Fig. 2 is a block diagram showing the electrical configuration of the ECU 12 of the first embodiment.

The ECU 12 includes a governing control section 30 and a fuel control section 32.

The governing control section 30 receives an input of a set rotating speed and an actual rotating speed of the dual-fuel diesel engine 1 and performs governing control such that the actual rotating speed becomes the set rotating speed, based on the difference between the set rotating speed and the actual rotating speed. Note that the governing control section 30 may perform governing control based on the difference between a set load and an actual load. Note that, in the first embodiment, the load is identified by a load ratio (load indicator value) that varies within the range from 0 to 100, when the maximum load with respect to the dual-fuel diesel engine 1 is 100% load ratio.

The fuel control section 32 outputs a fuel control command based on a command output from the governing control section 30.

The fuel control section 32 of the first embodiment includes an oil-fuel control part 34 and a gas-fuel control part 36.

The oil-fuel control part 34 calculates, based on a command output from the governing control section 30, an oil-fuel control command by using a predetermined function and outputs the oil-fuel control command to the oil-fuel injection valves 10.

The gas-fuel control part 36 calculates, based on a command output from the governing control section 30, a gas-fuel control command by using a predetermined function and outputs the gas-fuel control command to the gas-fuel injection valves 8.

Fig. 3 is a graph showing the relationship between the load ratio and the fuel control command.

The fuel control command shown in Fig. 3 is the sum of the oil-fuel control command and the gas-fuel control command. Specifically, the total amount of supplied calorific value of gas fuel and oil fuel increases as the load ratio increases. As an example, the fuel control command increases in proportion to the load ratio.

The fuel control section 32 starts supplying gas fuel after the load of the dual-fuel diesel engine 1 exceeds a predetermined value. Then, the fuel control section 32 controls the gas fuel and the oil fuel using different control amounts and increases the total amount of the supplied calorific value of the gas fuel and the oil fuel, according to increase in the load, as shown in Fig. 3. Accordingly, the ECU 12 can reduce the use of the oil fuel in the dual-fuel diesel engine 1. Furthermore, because the ECU 12 controls the gas fuel and the oil fuel using different control amounts, another pattern of control of the gas fuel and the oil fuel can be performed according to the purpose.

Note that the above-described predetermined value is referred to as switching load ratio in the following description. In the first embodiment, although the switching load ratio is set to 20% as an example, the value is not limited thereto and can be voluntarily set. Low-load operation is performed at a load ratio that is equal to or lower than the switching load ratio.

Specifically, when the load ratio of the dual-fuel diesel engine 1 increases and exceeds the switching load ratio, the single-fuel combustion using oil fuel is switched to multi-fuel combustion using oil fuel and gas fuel.

On the other hand, when the load ratio of the dual-fuel diesel engine 1 that is equal to or higher than the switching load ratio decreases and becomes equal to or lower than the switching load ratio, supplying gas fuel is stopped, and the multi-fuel combustion is switched to the single-fuel combustion.

Fig. 4 is a graph showing a change in oil-fuel control command and a change in gas-fuel control command in the case where the load of the dual-fuel diesel engine 1 of the first embodiment increases.

As shown in Fig. 4, when the load ratio exceeds the switching load ratio, the rate of increase in the oil-fuel control command becomes smaller compared with that of the time when the load ratio is lower than the switching load ratio. In other words, the oil-fuel control command is the value obtained by subtracting the gas-fuel control command from the fuel control command shown in Fig. 3. This decrease in the oil-fuel control command maintains the relationship between the fuel control command and the load ratio, as shown in Fig. 3.

On the other hand, the gas-fuel control command increases after a certain delay from the timing at which the load reaches the switching load ratio, and thereby supplying gas fuel is started after the certain delay.

This is because, if supplying gas fuel is started at the same time when the load of the dual-fuel diesel engine 1 increases and reaches the switching load ratio, the load (rotating speed) of the dual-fuel diesel engine 1 may increase rapidly. In such a case, in order to reduce the increased load, the supply of fuel is reduced through governor control. However, as a result, so-called chattering in which the load decreases too much and is increased again, as shown in Fig. 5, may occur. Note that the solid line in Fig. 5 indicates a case in which the load ratio increases as time passes without the occurrence of chattering even when the combustion mode is switched to the multi-fuel combustion. On the other hand, the dashed line in Fig. 5 indicates a case in which chattering occurs when the combustion mode is switched to the multi-fuel combustion.

Then, when load pullback occurs, in which the load decreases too much and becomes equal to or lower than the switching load ratio again, supplying gas fuel is stopped. When chattering occurs by the pullback, gas fuel supplying and stopping are repeated, which may cause a situation in which frequent switching occurs between single-fuel combustion and multi-fuel combustion.

Accordingly, as described above, when the load of the dual-fuel diesel engine 1 increases to the switching load ratio, the fuel control section 32 reduces the rate of increase of the oil fuel supply compared with that before the load reaches the switching load ratio and starts supplying gas fuel after a certain delay from the timing at which the load reaches the switching load ratio. Note that starting of the gas fuel supply after a certain delay from the timing at which the load reaches the switching load ratio means that supplying gas fuel is started when the load command becomes equal to or higher than a set value during a predetermined period of time (delay time ε1 in Fig. 5), for example.

Reducing the rate of increase of the oil fuel supply means that the increase in the load becomes slower than before. Then, when the timing at which gas fuel is supplied is delayed, supplying gas fuel is started during the slow increase in the load. Therefore, a situation in which the load increases rapidly due to supplying gas fuel, with chattering, is prevented.

Note that the delay time ε1 for the timing at which the gas-fuel control command starts to increased is a period of time that the load ratio does not become equal to or lower than the switching load ratio at the timing even when load pullback (a decrease) occurs due to starting the gas fuel supply. The delay time ε1 is empirically obtained by operating the dual-fuel diesel engine 1 or is obtained from simulation, for example.

Furthermore, when the load of the dual-fuel diesel engine 1 decreases and reaches the switching load ratio (20%), the supply of oil fuel is reduced to less than that before the load reaches the switching load ratio, as shown in Fig. 4. In other words, the rate of decrease of the oil fuel supply becomes larger.

Thus, when the supply of oil fuel is reduced, if supplying gas fuel is stopped at the same time when the load of the dual-fuel diesel engine 1 decreases and reaches the switching load ratio, the load (rotating speed) of the dual-fuel diesel engine 1 may decrease rapidly (dashed line in Fig. 6). In this case, chattering may occur, the load may exceed the switching load ratio again, and gas fuel supplying and stopping may be repeated, which may cause a situation in which frequent switching occurs between single-fuel combustion and multi-fuel combustion.

Accordingly, when the load decreases to the switching load ratio, the fuel control section 32 reduces the supply of oil fuel to the level less than that before the load reaches the switching load ratio, as shown in Fig. 4, and supplying gas fuel is stopped after a certain delay from the timing at which the load reaches the switching load ratio, as shown in Fig. 7. Note that stopping the gas fuel supply after a certain delay from the timing at which the load reaches the switching load ratio means that supplying gas fuel is stopped when the load command becomes equal to or lower than a set value after a predetermined period of time (delay time ε2 in Fig. 6) passes, for example.

As a result, because a reduction in the supply of oil fuel and stopping the gas fuel supply do not occur at the same time, a situation in which the load decreases rapidly, with chattering, is prevented.

Note that the delay time ε2 for the timing at which outputting the gas-fuel control command is stopped is a period of time in which the load ratio does not exceed the switching load ratio even when load pullback (an increase) occurs due to stopping the gas fuel supply. The delay time ε2 is empirically obtained by operating the dual-fuel diesel engine 1 or is obtained from simulation, for example.

In this way, the ECU 12 of the first embodiment has hysteresis in setting fuel supply starting (ON) and fuel supply stopping (OFF) of gas fuel.

As described above, the ECU 12 provided in the dual-fuel diesel engine 1 of the first embodiment performs governor control in which, when the load increases to the switching load ratio, the ECU 12 reduces the rate of increase of the oil fuel supply compared with that before the load reaches to the switching load ratio and starts supplying gas fuel after a certain delay from the timing at which the load reaches the switching load ratio. Furthermore, when the load decreases to the switching load ratio, the ECU 12 reduces the oil fuel supply to the level less than that before the load reatches to the switching load ratio and stops supplying gas fuel after a certain delay from the timing at which the load reaches the switching load ratio.

As a result, the ECU 12 can reduce the use of oil fuel and also allow stable operation using oil fuel and gas fuel.

### [Second Embodiment]

A second embodiment of the present invention will be described below.

Because the configurations of a dual-fuel diesel engine 1 and an ECU 12 of the second embodiment are the same as those of the dual-fuel diesel engine 1 and the ECU 12 of the first embodiment, which are shown in Figs. 1 and 2, a description thereof will be omitted.

Note that the ECU 12 of the second embodiment switches from the single-fuel combustion, which uses oil fuel, to the multi-fuel combustion, which uses oil fuel and gas fuel, when the load of the dual-fuel diesel engine 1 reaches a first switching load ratio. Furthermore, the ECU 12 switches from the multi-fuel combustion to the single-fuel combustion when the load of the dual-fuel diesel engine 1 reatches a second switching load ratio that is smaller than the first switching load ratio.

Fig. 8 is a schematic view showing timings at which outputting a gas-fuel control command is started and stopped, according to the second embodiment.

As shown in Fig. 8, when the load of the dual-fuel diesel engine 1 reaches a first switching load ratio L1, the gas-fuel control part 36 starts outputting a gas-fuel control command. On the other hand, when the load of the dual-fuel diesel engine 1 reaches a second switching load ratio L2, the gas-fuel control part 36 stops outputting the gas-fuel control command.

As a result, when the single-fuel combustion is switched to the multi-fuel combustion, even if chattering occurs and thus the load decreases, it is possible to prevent switching to the single-fuel combustion again. Furthermore, when the multi-fuel combustion is switched to the single-fuel combustion, even if chattering occurs and thus the load increases, it is possible to prevent switching to the multi-fuel combustion again.

Therefore, the ECU 12 provided in the dual-fuel diesel engine 1 of the second embodiment can reduce the use of oil fuel and also allow stable operation using oil fuel and gas fuel.

Although the present invention has been described above by using the embodiments, the technical scope of the present invention is not limited to the scope of the above-described embodiments. Various changes or improvements can be added to the above-described embodiments without departing from the scope of the invention, as it is defined in the claims, and an embodiment to which such changes or improvements are added is also encompassed in the technical scope of the present invention.

### {Reference Signs List}

- 1: dual-fuel diesel engine
- 12: ECU
- 30: governing control section
- 32: fuel control section

## Claims

1. A diesel engine control device for a diesel engine (1) that is operated by being supplied with gas fuel and oil fuel, the control device (12) comprising:
a governor control unit (30) configured to supply gas fuel and oil fuel by governor control;
**characterized in that** the diesel engine control device further comprises:
a fuel control unit (32) for reducing a rate of increase of oil fuel supply compared with that before a load of the diesel engine (1) reaches a predetermined value, and for starting gas fuel supply when a load command becomes equal to or higher than a set value during a predetermined period of time (ε1) after the load reaches the predetermined value.

2. The diesel engine control device according to claim 1, wherein, the fuel control unit (32) reduces the supply of the oil fuel compared with that before the load decreases and reaches the predetermined value and stops supplying the gas fuel after a certain delay from timing at which the load reaches the predetermined value.

3. A diesel engine comprising:
a gas-fuel injection valve (8) that is provided in a combustion chamber (c)and that injects gas fuel;
an oil-fuel injection valve (10) that is provided in the combustion chamber (c) and that injects oil fuel; and
a control device (12) according to any one of claims 1 or 2.

4. A diesel engine control method for a diesel engine (1) that is operated by being supplied with gas fuel and oil fuel, the control method comprising:
a first step of reducing the rate of increase of oil fuel supply compared with that before a load of the diesel engine increases and reaches a predetermined value; and
a second step of starting gas fuel supply when a load command becomes equal to or higher than a set value during a predetermined period of time (ε1) after the load reaches the predetermined value.

## Patentansprüche

1. Dieselmotor-Steuervorrichtung für einen Dieselmotor (1), der durch Zuführen von Brenngas und Brennöl betrieben wird, wobei die Steuervorrichtung (12) umfasst:
eine Drehzahlregel-Steuereinheit (30), die konfiguriert ist, um Brenngas und Brennöl mittels der Drehzahlregelsteuerung zuzuführen;
**dadurch gekennzeichnet, dass** die Dieselmotor-Steuervorrichtung weiter umfasst:
eine Brennstoff-Steuereinheit (32) zur Verringerung der Steigerungsrate der Brennölzufuhr im Vergleich zu derjenigen, die vorliegt, bevor die Last des Dieselmotors (1) einen vorbestimmten Wert erreicht, und zum Starten der Brenngaszufuhr, wenn ein Ladekommando während eines vorbestimmten Zeitraums (ε1) nachdem die Last den vorbestimmten Wert erreicht hat gleich oder größer ist als ein Sollwert.

2. Dieselmotor-Steuervorrichtung nach Anspruch 1, wobei die Brennstoff-Steuereinheit (32) die Zufuhr des Brennöls im Vergleich zu derjenigen, die vorliegt, bevor die Last abfällt und den vorbestimmten Wert erreicht, verringert und die Zufuhr des Brenngases nach einer gewissen Verzögerung ab dem Zeitpunkt, zu dem die Last den vorbestimmten Wert erreicht, stoppt.

3. Dieselmotor, umfassend:
ein Brenngas-Einspritzventil (8), das in einer Brennkammer (c) vorgesehen ist und Brenngas einspritzt;
ein Brennöl-Einspritzventil (10), das in der Brennkammer (c) vorgesehen ist und Brennöl einspritzt; und
eine Steuervorrichtung (12) nach Anspruch 1 oder 2.

4. Dieselmotor-Steuerverfahren für einen Dieselmotor (1), der durch Zuführen von Brenngas und Brennöl betrieben wird, wobei das Steuerverfahren umfasst:
einen ersten Schritt zur Verringerung der Steigerungsrate der Brennölzufuhr im Vergleich zu derjenigen, die vorliegt, bevor die Last des Dieselmotors steigt und einen vorbestimmten Wert erreicht; und
einen zweiten Schritt zum Starten der Brenngaszufuhr, wenn ein Ladekommando während eines vorbestimmten Zeitraums (ε1) nachdem die Last den vorbestimmten Wert erreicht hat gleich oder größer ist als ein Sollwert.

## Revendications

1. Dispositif de commande de moteur diesel pour un moteur diesel (1) qui est actionné en étant alimenté en carburant gazeux et en carburant huileux, le dispositif de commande (12) comprenant :
une unité de commande de régulateur (30) configurée pour une alimentation en carburant gazeux et en carburant huileux par commande de régulateur;
**caractérisé en ce que** le dispositif de commande de moteur diesel comprend en outre :
une unité de commande de carburant (32) pour la réduction d'un taux d'augmentation d'alimentation en carburant huileux par rapport à celui avant qu'une charge du moteur diesel (1) n'atteigne une valeur prédéterminée, et pour le démarrage de l'alimentation en carburant gazeux lorsqu'une commande de charge devient égale ou supérieure à une valeur de consigne pendant une période de temps prédéterminée (ε1) après que la charge atteint la valeur prédéterminée.

2. Dispositif de commande de moteur diesel selon la revendication 1, dans lequel, l'unité de commande de carburant (32) réduit l'alimentation en carburant huileux par rapport à celle avant que la charge ne diminue et n'atteigne la valeur prédéterminée et arrête l'alimentation en carburant gazeux après un certain délai à partir du moment auquel la charge atteint la valeur prédéterminée.

3. Moteur diesel comprenant :
une soupape d'injection de carburant gazeux (8) qui est prévue dans une chambre de combustion (c) et qui injecte du carburant gazeux ;
une soupape d'injection de carburant huileux (10) qui est prévue dans la chambre de combustion (c) et qui injecte du carburant huileux; et
un dispositif de commande (12) selon l'une quelconque des revendications 1 ou 2.

4. Procédé de commande de moteur diesel pour un moteur diesel (1) qui est actionné en étant alimenté en carburant gazeux et en carburant huileux, le procédé de commande comprenant :
une première étape de réduction du taux d'augmentation d'alimentation en carburant huileux par rapport à celui avant qu'une charge du moteur diesel n'augmente et n'atteigne une valeur prédéterminée ; et
une seconde étape de démarrage de l'alimentation en carburant gazeux lorsqu'une commande de charge devient égale ou supérieure à une valeur de consigne pendant une période de temps prédéterminée (ε1) après que la charge atteint la valeur prédéterminée.
